Europäisches Patentamt

(19) European Patent Office

Office européen des brevets

(11) Publication number: **0 346 037 B1**

# (12) EUROPEAN PATENT SPECIFICATION

(45) Date of publication of patent specification:
21.08.91 Bulletin 91/34

(51) Int. Cl.⁵: **B01J 39/06, B01J 41/06, B01D 15/08**

(21) Application number: 89305632.5

(22) Date of filing: 05.06.89

(54) Composite ion-exchange compositions for ion chromatography.

(30) Priority: 07.06.88 US 203780

(43) Date of publication of application:
13.12.89 Bulletin 89/50

(45) Publication of the grant of the patent:
21.08.91 Bulletin 91/34

(84) Designated Contracting States:
BE DE ES FR GB IT NL

(56) References cited:
FR-A- 2 510 426
US-A- 4 376 047
CHEMICAL ABSTRACTS, vol. 109, no. 16, 1988, abstract no. 141614j, Columbus, Ohio, US; L. XIANG et al.: "Ion chromatography on statically coated liquid ion exchanger column", & YOUJI HUAXUE, 8(3), 231-4
CHEMICAL ABSTRACTS, vol. 89, no. 8, 1978, abstract no. 67315n, Columbus, Ohio, US; & JP-A-53 8391 (SUMITOMO ELECTRIC INDUSTRIES, LTD) 25-01-1978

(56) References cited:
JOURNAL OF CHROMATOGRAPHY, vol. 262, 1983, pages 311-315, Elsevier Science Publishers B.V., Amsterdam, NL; R.M. CASSIDY et al.: "Dynamically coated columns and conductivity detection for trace determination of organic anions by ion chromatography"

(73) Proprietor: ROHM AND HAAS COMPANY
Independence Mall West
Philadelphia Pennsylvania 19105 (US)

(72) Inventor: Naples, John Otto
1570 Dreshertown Road
Dresher Pennsylvania 19025 (US)
Inventor: Fritz, James S.
2018 Greenbriar Ames
Iowa 50010 (US)
Inventor: Warth, Linda M.
RR2, Box 5
Madison Nebraska 68748 (US)

(74) Representative: Tanner, James Percival et al
ROHM AND HAAS (UK) LTD. European Operations Patent Department Lennig House
2 Mason's Avenue
Croydon CR9 3NB (GB)

## Description

This invention concerns ion-exchange compositions adapted for use in ion chromatographic analysis and separation.

Ion chromatography as an analytical method for the quantitative determination of ions in aqueous media is growing in popularity and acceptance because the technique is applicable to a wide variety of inorganic and hydrophilic organic anions and cations, allowing separation and measurement of up to 8 or 10 different anions and similar numbers of cations. Ion-exchange chromatography is the most common form of ion chromatography, utilizing an anion exchange resin column to separate anions and a cation exchange resin column to separate cations. In addition to the separator column, ion-exchange chromatography includes an ion detector and a chromatogram recorder.

The principles, instrumentation and many of the resins used in ion-exchange chromatography are well known as summarized, for example, in "Ion Chromatography", J.S. Fritz, Anal. Chem. 1987, 59, 335A-344A ; "Coated Anion-Exchange Resins For Ion Chromatography," D.L. Duval and J.S. Fritz, J. Chromatogr. 1984, 295, 89-101" and "Reproducible Preparation of Low-Capacity Anion-Exchange Resins," R.E. Barron and J.S. Fritz, Reactive Polymers 1983, 1, 215-226.

As explained in the "Ion Chromatography" article above, ion-exchange chromatographic analysis can be accomplished in a single separator column, i.e., without the second, suppressor, column or membrane if the ion-exchange resin used in the separation column has a sufficiently low ion-exchange capacity and if a very dilute eluent is used. Typically, for separation of anions, the capacity is about 0.005-0.10 meq/g and the eluents are 0.0001-0.0010 M or higher concentration solutions of sodium or potassium salts of benzoic, hydroxybenzoic or phthalic acid. When detection is by conductivity, use of a dilute solution of carboxylic acid instead of a salt will improve the detection limit of many anions, often tenfold. Similar considerations apply to determination of cations. The dilute eluent reduces the background conductivity and the low ion-exchange capacity of the resin increases the sensitivity and selectivity of ion detection, thus substituting for the same functions for which suppressor columns are used.

Among the ion-exchange resins applied to ion-exchange chromatography are those described in US-A-4101460 to Small et al ; US-A-4519905 to Stevens et al ; and US-A-4351909, to Stevens ; US-A-4447559 to Hansoka et al ; and US-A-4495250 to Itagaki et al. The Small et al, Stevens et al and Stevens patents describe composite resins in which a substrate resin of one charge is coated or otherwise combined with a surface resin of opposite charge. The Hansoka et al patent describes a composite resin wherein a binder is used to adhere an ion-exchange resin to the surface of carrier resin particles, the surface particles being smaller than the resin particles and the carrier particles being uncharged (having no ion-exchange groups). In the Itagaki et al patent, an anion exchange resin is produced by coating a lipophilic cross-linked polymer matrix with a water insoluble, hydrophilic polymer layer and then fixing the coating on the surface by cross-linking and hydrophilizing with a polyamine.

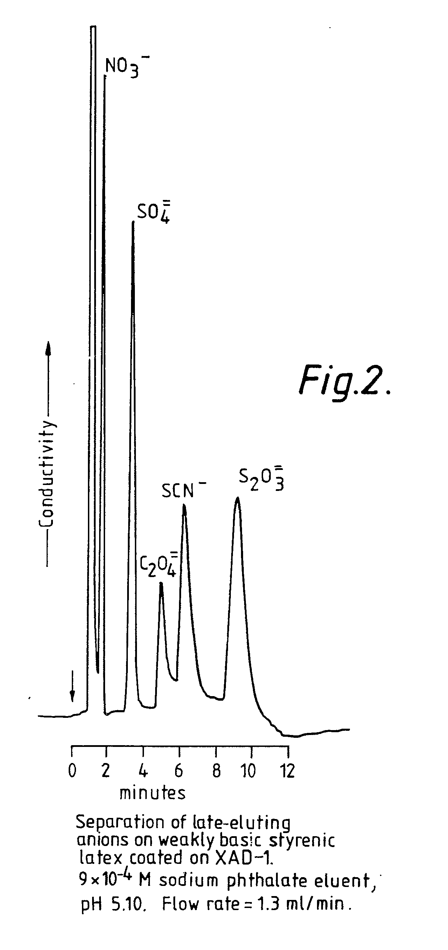

The foregoing and other known resins have various deficiencies. The resins of the Itagaki et al patent, for example, cannot give baseline separations of certain common ions, such as bromide and nitrate (Fig. 2 of the patent). Similar behavior results when non-particulate matter is coated onto gelular, non-macroporous, supports. The supports must be ground and sieved to provide good separations. In addition, the desired low ion-exchange capacity is difficult to achieve reproducibly by partial functionalization because a difference of a few seconds in functionalization time or a difference of a few milligrams in concentration of functionalizing reagent will give a resin (and column packing) of undesired or unstable capacity. Still further, composite resins wherein support and surface resins are electrostatically bound, or wherein latex particles are coated onto a partially functionalized support resin, as in US-A-4,101,460, 4,519,905 and 4,351,909, are more complex to manufacture by virtue of the careful functionalization required. Other known composite resins suffer from similar complexities of manufacture as well as instability and/or limited selectivity and therefore provide no commercial advantage or practical improvement.

It has now been found that by binding small size, water insoluble particles having the requisite ion-exchange capacity (imparted before, during or after the bonding process), to water insoluble particles larger than the funtionalized surface particles but having substantially no ion-exchange capacity, composite ion-exchange compositions can be produced having the low capacity, stability, selectivity and synthesis reproducibility required for efficient ion-exchange chromatography, particularly single column ion chromatography.

Accordingly in a first aspect the invention provides a composite ion-exchange composition comprising : water insoluble hydrophobic support particles having an average particle size ranging from 2 to 50 µm, preferably from 3 to 12 µm, and substantially no ion-exchange capacity, and hydrophobically bound to the surface of said support particles, a coating of water insoluble, hydrophobic ion-exchange functionalized particles having an average particle size smaller that that of the support particles and ranging from 0.01 to 10 µm, preferably from 0.05 to 1.2 μm. Such composite ion-exchange compositions useful for ion chromatography may be produced by coating hydrophobic, unfunctionalized support particles with hydrophobic surface particles, the surface particles being functionalized before, after or during the coating process to provide the desired ion-exchange capacity. An electrolyte may be used in the coating process having a concentration selected to reproducibly alter the ion-exchange capacity of the surface particles to the desired amount.

The term "hydrophobic bonding" is intended to exclude both covalent and ionic bonding. It is believed that van der Waals forces are involved (although the present invention is not limited by that theory) ; the support particles and surface particles are bound by their mutual hydrophobicity.

In another aspect of the invention, ion-exchange analytical columns are adapted to ion-exchange chromatography and methods by utilizing, as the ion-exchange material, the aforesaid composite ion-exchange compositions.

The invention will now be described in more detail with reference to the accompanying Figures, in which:

Fig. 1 is a plot of ion-exchange capacity versus NaCl concentration, demonstrating a method of producing requisite capacity in a surface resin of a composite ion-exchange composition produced in accordance with the present invention ; and

Figs. 2-3 represent chromatograms obtained upon elution of mixtures of anions through column packings of ion-exchange compositions of the invention, showing conductivity of the anions as a function of time required for elution.

The support particles and the particulate surface coatings of the composite ion-exchange compositions of the invention comprise any organic or inorganic water insoluble, hydrophobic particulate materials but with differences in average particle size (greatest dimension of length, thickness or diameter) and ion-exchange capacity depending on whether the particles are used as the supports or surface coatings. Whereas the support particles are characterized as having substantially no ion-exchange capacity, the surface particles will have sufficient functionality in the composite material to provide the requisite ion-exchange capacity for use of the composite material in ion-exchange chromatography. Typical materials useful for either the support or surface particles include both natural and synthetic substances such as styrenic and acrylic polymers and co-polymers (e.g., polystyrene, polyacrylate, polymethacrylate), carbon, proteinaceous materials, silica (including glass beads), alumina, titania, zirconia or any combination thereof. The particles may be perfect spheres or they may be irregular in shape, and must be hydrophobic, either inherently or as a result of covalently bound hydrophobic groups (as by silation of silica or alumina to the extent required). If the particles are resins, they may be in gel or macroreticular form with sufficient cross-linking to render the particles water insoluble.

The surface particles should be smaller than the support particles in order to uniformly coat the surface of the support particles to form pellicular compositions suitable as packings for chromatographic columns. Thus, the surface particles will have an average particle size ranging from about 0.01 to about 10 μm, preferably less than about 5 microns, e.g., about 0.05-1.2 μm. The particle size of the support particles may range, on the average, from about 2 to about 50 μm, preferably about 3-12 μm.

The surface particles should have a sufficient density of covalently bound ion-exchange groups to render the composite particles effective as ion separating material when properly packed in an ion-exchange chromatographic column. A capacity of up to about 1200 μeq/g (microequivalents per gram) will be effective for this purpose, a preferred range being about 5-1200 μeq/g, more preferably about 5-200 μeq/g, The capacity may be either anionic or cationic depending upon the character of the ions to be determined. Such capacities are far lower than the capacities of resins used for conventional ion-exchange because, as the capacity is lowered, ions to be separated on the material are retained less strongly, allowing the use of a more dilute eluent. A more dilute eluent, in turn, reduces background interference during the analysis, thus lowering the limits of detection for the system.

In accordance with the present invention, it is believed that if the lower capacity resides in the surface of the particles as opposed to being more or less uniformly distributed between the surface and the core of the particles (as is the case with conventional ion-exchange materials), much sharper separation of ions will result. This is because each ion need only traverse the same relatively short path from the bulk medium (water) to an exchange site on the surface and back to the bulk medium. If the exchange sites existed in the core of the particles, some ions would traverse different and longer paths from the bulk medium to the surface, then to the core and back to the surface, and finally to the bulk medium again. Chromatograms would show these longer paths as broader peaks or as peaks with long tails.

It is important that the surface particles be hydrophobically bound to the support particles because functional moieties of surface particles that are not bound to the support particles can, in time, either penetrate deeper into the support particles, or leave the support particles altogether, so that retention times and chromatographs will change over time. Various methods have been used in the past to functionalize polymeric particles with the goal of reducing instability, that is, of avoiding change of retention times and chromatographs over time.

These methods have included sparingly functionalizing the support particles, limiting the time the support particles are exposed to functionalizing reagents, or limiting the strength of the functionalizing reagents. Nevertheless, all of these methods have resulted in non-uniform functionalization and insufficient bonding of surface particles to support particles. By hydrophobically bonding small surface particles to larger support particles in accordance with the present invention, the surface particles having the requisite capacity prior to the bonding or the requisite capacity being imparted by modifying the functionality of the surface particles during or after bonding to the support particles by treatment of the surface particles with an electrolyte solution of a predetermined concentration, composite ion-exchange compositions are produced having suitable stability, selectivity, low capacity and synthesis reproducibility for efficient ion-exchange chromatography.

A preferred composite ion-exchange composition of the invention is prepared by coating non-functionalized resin particles, having an average particle size of about 3-12 μm, with a resin latex. The ion-exchange capacity of the latex may vary over a broad range. The requisite ion-exchange capacity for the latex-coated resin may be achieved by utilizing in the coating process an inert electrolyte of an appropriate concentration to obtain a heavier resin coating.

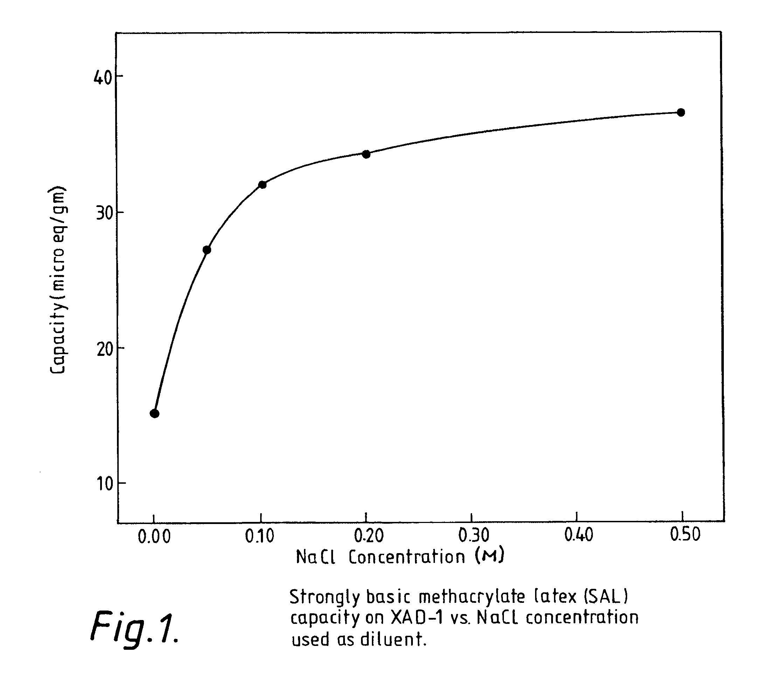

A suitable electrolyte for moderating anion capacity is NaCl. Thus, as shown in Fig. 1 and Table 1 appended, the anion capacity of a strongly basic methacrylate latex coating on an unfunctionalized macroreticular polystyrene adsorbent resin (XAD-1, Rohm and Haas Company), which had been ground, extracted and sieved to obtain a 30-37 micron particle size fraction, can be moderated to a capacity of 0.031 ± 0.002 meq/g using 0.1 M NaCl. At 0.5 M NaCl concentration, the capacity is about 0.037 meq/g. At 0.0 M NaCl concentration, the capacity is 0.015 meq/g. The capacities are, of course, also dependent on the type of support and surface resins. For the resins of Table 1, it will be noted that the lowest capacity by treatment with 0.10 M NaCl was achieved with a strongly basic methacrylate latex coating on an amide type macroreticular support resin.

Support particles can be produced in the appropriate particle sizes or, if too large, the particles can be ground, extracted and sieved to obtain a fraction of the desired particle size. Either gelular or macroreticular resins may be used as support particles, such as the resins described in US-A-3,531,463 and US-A-4,297,220. Other resins useful as support particles are the carbonaceous absorbents described in US-A-4,063,912 to Neely et al.

Still other substrate resins preferred in the present invention are monodisperse latex particles described in the technical and patent literature, such as US-A-3,424,706 to Smith et al ; US-A-4,046,730 to Tortai et al ; US-A-4,247,434 to Vanderhoff et al ; and US-A-4,459,378 to Ugelstad ; and in "The First Products Made in Space : Monodisperse Latex Particles" by J.W. Vanderhoff et al., American Institute of Aeronautics and Astronautics, AIAA 25th Aerospace Sciences Meeting, Jan 12-15, 1987/Reno, Nevada.

The serial polymerization techniques of the foregoing patents and publication are particularly appropriate for preparing support resins of the present invention. Typically, these monodisperse resins are prepared by multi-stage continuous growth processes wherein the polymerizate particles of a first stage polymerization are used as seed particles in a second polymerization, the polymerizate particles of the second stage are used as seed particles in the third stage, and so on, until an appropriate particle size and particle size distribution is attained. In this manner, the limitations on particle size inherent in a single stage emulsion polymerization can be overcome and hydrophobic support resins can be produced which, although relatively small in particle size as compared with conventional ion-exchange resins, nevertheless are sufficiently large to accept a uniform coating of a smaller particle size resin such as a functionalized latex resin.

Preferred surface coating resins for use in the invention are the ultra-fine latex anion and cation exchange resins disclosed in US-A-4,359,537, 4,380,590 to B.P. Chang and US-A-4,537,683 to E.G. Isacoff and J.W. Neely. Such resins are commercially available from Rohm & Haas Company, Philadelphia, PA. Other functionalized resins useful as coating resins of the invention are the resins described in the article "Preparation of Monodisperse Reactive Styrene-glycidyl Methacrylate Latexes By The Emulsifier-Free Dispersion Co-polymerization Technique", by Zurkova et al., J. Polymer Sci. : Polym Chem ED 1983, 2100, 2149-60 and in U.S. Patent 4,243,772. All of the foregoing patents and technical articles are incorporated herein by reference.

Any suitable blending process may be used for preparing the ion-exchange compositions of the invention. In the case of coating synthetic resin particles with a resin latex, the support resin may be wetted with an organic solvent such as acetonitrile solution and the ion-exchange surface particles added as a latex to the wetted support resin. The mixture is then agitated by any suitable means, such as a sonic mixer, to remove agglomerated resin, and the mixture is then diluted with an inert electrolyte solution. The diluted solution is permitted to settle and is filtered, for example, through a coarse-fritted crucible. Excess latex is removed from the coated resin by rinsing with deionized water, and the product packed into an appropriate column for ion-exchange chromatography. By varying the concentration of the electrolyte solution, when coating the support particles with the latex, the ion-exchange capacity of the resulting resin can be reproducively altered to provide a predetermined capacity, as described above and as further illustrated in the examples.

The resulting composite ion-exchange compositions are useful as packings for the chromatographic separation of ions and for analytical determination thereof. In addition, the compositions may be used for the analysis of amino acids, alcohols, carbohydrates, antibiotics, peptides, proteins and nucleic acids. The composition may also be employed for the resolution of enantiomeric mixtures by utilizing a coating resin containing an enantiomer-resolving moiety. The details of the foregoing procedures are well known, including instrumentation to detect and record the separations and determinations.

The following examples will serve as further illustration of the invention. In the examples, all parts and percentages are by weight and all degrees are centigrade unless otherwise indicated.

## Example 1

### A. Surface Coating Resin

A strongly basic methacrylate latex was prepared by stirring a weakly basic methacrylate latex in the presence of an amount of methyl chloride sufficient to quaternize about 80% of the amine groups of the weakly basic latex, thus providing an 80% functionalized resin. The weakly basic latex was produced from a monomer emulsion (ME) prepared by stirring a mixture of 446.1 g of 54% divinylbenzene (DVB) solution, 1536.6 g of styrene and 2974.1 g of dimethylaminoethyl methacrylate into a dispersion of 842.7 g of Triton X-405 alkylphenyl polyether alcohol emulsifier (Rohm and Haas Company) in 2090.5 g of de-ionized (DI) water. To a stirred mixture of 250 g of ME, 6694 g of DI water and 210.8 g of Triton X-405 at 58-62°C was added a mixture of 431 g of 0.15% ferrous sulfate solution and 269.4 g of a 1% Versene solution, followed by 269.4 g of catalyst solution (118.5 g of t-butyl hydroperoxide in 5387.9 g of DI water) and 269.4 g of activator solution (80.6 g of Formopon sodium sulfoxylate (SSF) in 5387.9 g of DI water). After the polymerization had started (in 1-5 minutes with a 1-2 degree exotherm), the simultaneous feeding of ME, catalyst solution and activator solution at the following rates was begun :

```
Monomer emulsion (ME)          66.8g/minute
Cofeed catalyst solution       7.76g/minute
Cofeed activator solution      7.76g/minute
```

These feed rates were maintained, and cooling was applied as necessary to maintain a temperature of 58-62°C. Fifteen minutes after the feeds were complete, the DVB chaser (118.5 g of DVB, 25.9 g of Triton X-405 and 107.8 g of DI water) was added). Stirring was continued at 58-60°C for 15 minutes. Chaser catalyst (4.3 g of t-butyl hydroperoxide and 538.8 g of DI water) was added slowly, followed by the chaser activator (3.2 g of SSF and 538.8 of DI water). After fifteen more minutes, the batch was cooled to 40°C, filtered through cheesecloth, then ultrafiltered to reduce the emulsifier (Triton X-405) level. The resulting resin had an average particle size of 0.08 μm.

### B. Substrate Resin — Preparation of Composite Resin

A nonpolar, macroreticular polystyrene resin (Amberlite XAD-1, Rohm and Haas Company) was ground, Soxlet-extracted to remove extractable remnants of polymerization, and sieved to obtain a 30-37 and 20-26 μm mean diameter fractions. A weighed amount of the resulting support resin was wetted with a minimum amount of acetonitrile. A measured amount of the surface coating resin of A above was added to the support resin. The mixture was diluted to an appropriate volume with saline solution, allowed to settle, and then filtered through a coarse-fritted crucible. The resulting composite resin was then thoroughly rinsed with DI water to remove excess latex and packed into a column effective for ion chromatography.

By varying the concentration of the saline solution used in the coating process, the anion exchange capacity of the resulting composite resin was reproducibly altered over a suitable working range for ion chromatography. This is shown in Fig. 1 wherein it will also be noted that the capacity did not change substantially once the saline concentration reached about 0.15 M.

## Example 2

A strongly basic styrene latex was prepared essentially as described in Example 17 of U.S. Patent 4,359,537 except for 2.12% divinylbenzene in place of the 3% in the copolymer emulsion incorporated into Example 17 from Example 13 of the patent. The latex was Kady-milled and ultrafiltered to give an emulsion (chloride form) of about 10.5% solids, pH 6-7 and mean particle size of 0.24 μm.

A series of composite resins were then prepared with the resulting styrenic latex and the strongly basic methacrylate latex of Example 1, Part A, in the manner described in Example 1, Part B, to compare capacities and other properties (Table 1 appended) when the types of surface and support resins were varied. In each composite resin, the XAD support resin was ground, extracted and sieved as in Example 1 to provide a 30-37 μm mean diameter fraction. The support resin in each composite resin is an Amberlite XAD macroreticular resin (Rohm and Haas Company) differing from nonpolar (XAD-1,-2 and -4) to polar (XAD-11). In all cases, the styrenic latex coated more heavily on the XAD resins than did the methacrylate latex. However, the styrenic coatings appeared to be less permanent than the methacrylate coatings because the standard deviations of capacities of the styrenic-coated composite resins were higher than those of the methacrylate-coated composite resins. The bonding of the surface resins to the support resins appears to be controlled primarily by hydrophobic forces (e.g., Van der Waals or dispersive forces) rather than electrostatic forces because the overall capacities decrease with increasing polarity of the XAD support resin. It is believed that the electrolyte added during the coating process plays a significant part in the hydrophobic bonding by neutralizing and blocking the electrostatic repulsions between the highly charged surface resin particles, thereby allowing more of the surface resin particles to adhere to the support resin (resulting in a higher capacity) when a higher concentration of electrolyte is used.

## Example 3

The weakly basic resin of Example 1, Part A, was coated (also as described in Example 1, Part B) on an Amberlite XAD-1 resin having a mean particle diamter of 20-26 μm. The resulting composite resin and the strongly basic resin-coated composite resin described in Example 1 (but prepared with the 20-26 μm XAD-1 support resin) were packed into 250 × 2 mm (internal diameter) glass-lined steel columns. The weakly basic and strongly basic columns had capacities of 0.018 and 0.020 meq/g, respectively, and were run using an eluent of $1.25 \times 10^{-4}$ M sodium phthalate at pH 4.65. The eluent pH was chosen as 4.65 in order to maintain full protonation of the weakly basic exchanger and thereby maintain full column capacity.

The major selectivity difference (see Table 2 appended) between the strongly basic and weakly basic columns is the higher affinity of the strongly basic column for the larger, more polarizable anions. For example, the relative retention times of iodide and thiocyanate on the weakly basic column are less than half their retention times on the strongly basic column. Thus, the weakly basic column provides faster separations of these and other ions when used in ion chromatography. This is shown in Fig. 2 for separation of several late eluting anions. As evident from the chromatogram of Fig. 2, the high eluent concentration elutes these anions early, but the eluent pH of 5.1 also serves to decrease the column capacity a bit (by deprotonating the weakly basic exchanger slightly) so that these anions can elute even earlier. Nevertheless, the strongly basic column has the ability to separate chloride and nitrite, and also bromide and nitrate, ions which are not well separated on a conventional functionalized trimethylamine XAD-1 resin column.

## Example 4

A very low capacity (0.005 meq/g) weakly basic methacrylate latex-coated XAD-1 resin packing was prepared as described in Example 1. A $3.7 \times 10^{-5}$ M sodium phthalate eluent was used at a pH of 6.5 to separate sulfate. The detector wavelength (indirect spectrophotometric detection) was 224 nm. (The low capacity packing permits lower eluent concentrations, thus reducing the background level and decreasing the detection limits). A chromatogram of 10 ppb of sulfate was produced using the low capacity latex column. The detection limit was conservatively estimated at 4 ppb (0.4 ng). This is lower than the experimental detection limits previously reported [(H. Small and T.E. Miller, Jr., Anal. Chem., 54, 462 (1982), S.A. Wilson and E.S. Yeung, Anal. Chem. Acta, 157, 53 (1984)] and is about five times lower than the detection limit for sulfate using a commercial column of a higher capacity.

## Example 5

The coating ability of different resin supports was investigated. Table 3 appended shows the capacities for composite resins of the invention obtained when the strongly basic methacrylate latex of Example 1, Part A, was coated on commercially available Toya Soda K. (TSK) polystyrene support beads. The polystyrene adsorbs the latex more strongly than the more polar polyvinylacetate or polyethylene glycol beads.

These same latex-coated beads were hand-packed using a 0.2 M NaCl solvent into 5.0 cm × 4.6 mm i.d. plastic TSK columns. Each column was tested with a 0.0002 M sodium phthalate eluent at pH 5.5 and at a flow rate of 1.3 ml/min. Using conductivity detection, the retention times of several inorganic anions were recorded. Table 4 appended is a comparison of the adjusted retention times of the anions on the three columns and shows that the resin matrix used in ion chromatography affects the retention of anions. The retention data indicate that the more polar polyvinylacetate column retains anions from 14 to 33% longer than the polystyrene column. In contrast, the adjusted retention times obtained with the polyethylene glycol column were 4 to 18% lower than those obtained with the polystyrene column.

## Example 6

A 75.6% functionalized, strongly basic, styrenic latex was prepared as follows : 0.5 g of ammonium persulfate were dissolved in 470 g water. A solution of 21 g vinylbenzyl chloride, 6 g styrene and 3 g 55.3% divinylbenzene was added. The mixture was stirred vigorously, heated at 65°C for 4 hours and then cooled. 70 g of 25% trimethylamine were added and the mixture was stirred at 25°C for 1 hour, 35°C for 1 hour, 45°C, for 1 hour, 55°C for 1 hour, and 75°C for 1 hour. Air was then bubbled through the sample for 1 hour at 70°C to give 315,45 cm³ (2/3 pint) of off-white latex.

The styrenic latex coated about 13 times more heavily onto XAD-1 resin than did a 100% functionalized latex. After several methanol washes, 8% of the 100% and 5% of the 75.6% functionalized latex came off the support, showing that the coatings were fairly stable in methanol.

The high capacity obtained with the less functionalized latex thus gives a wider range of capacity values and more flexibility in ion chromatography. It is also advantageous to work with a resin of higher capacity (0.05–0.10 meq/g) in order to best separate mono- and divalent anions simultaneously.

## Example 7

A hydrophobic monodisperse polystyrene support resin having an average particle size of 4.2 μm and narrow particle size distribution was prepared as follows wherein the divinylbenzene was a commercial grade of about 55% divinylbenzene content, the remainder being mainly ethylvinylbenzene. All water used was deionized.

(1) To a suitable reactor equipped with a means for heating the exterior, a means for addition of initiator and monomer, a nitrogen sweep, a reflux condensor, and stirrer was charged, 791 parts of water, 200 parts of styrene, 7.5 parts of dihexyl sodium sulfosuccinate and 1 part sodium bicarbonate. The mixture was heated to 80°C under a nitrogen sweep and the stirring increased to 200 rpm. Sodium persulfate initiator, 1 part in 20 parts of water, was added. The mixture was maintained at 80°C for 5.5 hours with stirring, heated to 90°C for 30 minutes, cooled and filtered. The particle size was 266 nm (0.266 μm) and was narrow.

(2) To a reactor equipped as in step (1) was charged 510.9 parts of the emulsion of step (1) and 1372 parts of water. The mixture was heated with stirring to 85°C and 3.5 parts of sodium persulfate in 60 parts water were added. After 15 minutes, 700 parts of styrene were added uniformly over a 1 hour period ; stirring was at 250 rpm. The monomer feed line was rinsed with 30 parts of water and the reaction temperature maintained at 85°C for 90 minutes more. The reaction mixture was cooled, filtered, and treated with 2 parts of aqueous ammonia. A narrow particle size emulsion of 525 nm (0.525 μm) was obtained.

(3) To a reactor equipped as in step (1) was charged 437.7 parts of the emulsion of step (2) and 2037.7 parts of water. The mixture was heated with stirring to 85°C and 4.6 parts of sodium persulfate in 60 parts water were added. After 15 minutes, 910 parts of styrene were added uniformly over a 1 hour period ; stirring was at 250 rpm. The monomer feed line was rinsed with 30 parts of water and the reaction temperature maintained at 85°C for 90 minutes more. The mixture was cooled, filtered, and treated with 2 parts of aqueous ammonia. A narrow particle size emulsion of 1.02 μm was obtained.

(4) To a reactor equipped as in step (1) was charged 126.6 parts of the emulsion of step (3) and 430 parts of water. The mixture was heated with stirring to 85°C and 1.75 parts of sodium persulfate in 35 parts water were added. After 15 minutes, 350 parts of styrene were added uniformly over a 1 hour period ; stirring was at 250 rpm. The monomer feed line was rinsed with 30 parts of water and the reaction temperature maintained at 85°C for 90 minutes more. The mixture was then cooled, filtered, and treated with 1 part of aqueous ammonia. A narrow particle size emulsion of 2.11 μm was obtained.

(5) To a reactor equipped as in step (1) was charged 128.2 parts of the emulsion of step (4) and 572 parts of water. The mixture was heated to 85°C as previously. Sodium persulfate (1.75 parts in 35 parts water) was added. Styrene (350 parts) was added over one hour at a stirring rate of 180 rpm, then 0.88 parts additional sodium persulfate were added during the one-hour hold period. The reaction was worked up as in steps (1) to (4), and neutralized with 1 part aqueous ammonia. The particle size was 4.2 μm, with about 2% oversize particles.

The strongly basic methacrylate resin latex of Example 1 was coated on the thus-prepared polystyrene support resin essentially as described in Example 1 and the resulting composite resin packed into a 250 × 4.0 mM i.d. column. The same methacrylate resin latex was coated in the same manner on an Amberlite XAD-1 resin (substantially the same resin as in Example 1 but having an average particle size of 28-36 μm) and also packed into a column of the same size. The 4.2 μm particle size polystyrene supported composite resin had a capacity of about 27 microequivalents per gram ; the XAD-1 supported composite resin had a capacity of about 25 microequivalents per gram.

The XAD-1 supported resin gave a good separation of $IO_3^-$, $CH_3SO_3^-$ and $Cl^-$ using a 35 mM nicotinic acid eluent at a column pressure of 1379 KPa (200 psi) and a flow rate of 1.0 ml/min. The number of theoretical plates for the $Cl^-$ peak was 720. The separation was even better on the polystyrene supported column : using a 70 mM nicotinic acid eluent and a column pressure of over 2000 psi at a 1.0 ml/min flow rate, the $Cl^-$ peak gave 4900 theoretical plates — over six times that of the separation with the XAD-1 supported resin composite. In other separations, of $Cl^-$, $Br^-$, $NO_3^-$ and $SO_4^=$, using sodium phthalate as eluent, the number of theoretical plates was 733 for the XAD-1 supported column and over 4600 for the polystyrene supported column.

Example 8

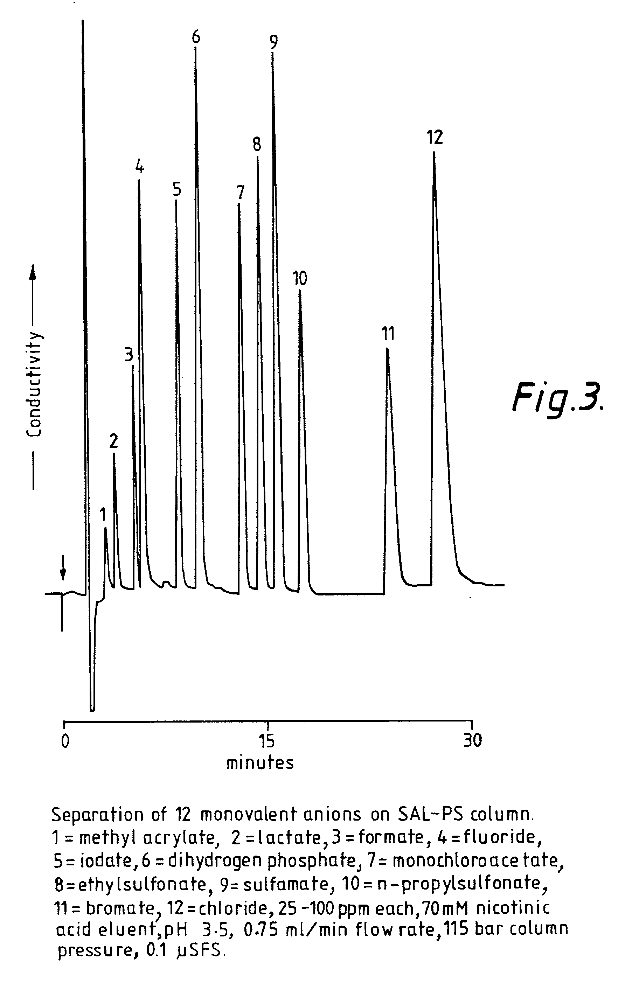

The polystyrene supported resin column of Example 7 was used to separate 12 monovalent anions using a 70 mM nicotinic acid eluent. As shown in the Chromatogram of Fig. 3, baseline resolution was achieved for every peak, indicating highly efficient separation. The high efficiency is believed to result from the uniform size, spherical shape and small particle size of the polystyrene support of the composite resin.

Table 1

Capacity of various Latex-Coated Resin Composites

| Support Resins | | Surface Area $(m^2/gram)$ | Avg. Pore Diameter $(Å\ 10^{-10}\ m)$ | Capacity w/Strongly Basic Methacrylate Latex (meq/gram) | Capacity w/Strongly Basic Styrenic Latex (meq/gram) |
|---|---|---|---|---|---|
| XAD-1 | nonpolar styrene – DVB | 100 | 205 | $0.031 \pm 0.002$ | $0.046 \pm 0.006$ |
| XAD-2 | nonpolar styrene – DVB | 300 | 90 | $0.029 \pm 0.003$ | $0.085 \pm 0.007$ |
| XAD-4 | nonpolar styrene – DVB | 784 | 50 | $0.016 \pm 0.002$ | $0.026 \pm 0.004$ |
| XAD-7 | Intermediate polarity acrylic aster | 450 | 90 | $0.025 \pm 0.002$ | $0.062 \pm 0.009$ |
| XAD-8 | Intermediate polarity acrylic ester | 140 | 235 | $0.014 \pm 0.002$ | $0.031 \pm 0.006$ |
| XAD-11 | polar amide | 69 | 352 | $0.015 \pm 0.002$ | $0.045 \pm 0.002$ |

8

## Table 2

Adjusted Retention Times of Various Anions
on a Weak (WBC) and a Strong Base Column (SBC)[1]

| Anion | SBC $t_R'/t_{R,Cl}$ | WBC $t_R'/t_{R,Cl}$ |
|---|---|---|
| $Cl^-$ | 1.00 ($t_R'$-1.2 min.) | 1.00 ($t_R'$=0.8 min.) |
| $C_2H_3O_2^-$ | 0.43 | 0.69 |
| $F^-$ | 0.65 | 0.81 |
| $IO_3^-$ | 0.65 | 0.81 |
| $EtSO_3^-$ | 0.83 | 0.94 |
| $BrO_3^-$ | 1.00 | 0.94 |
| $PrSO_3^-$ | 1.17 | 1.19 |
| $NO_2^-$ | 1.35 | 1.31 |
| $Br^-$ | 1.96 | 1.50 |
| $NO_3^-$ | 2.39 | 1.88 |
| $ClO_3^-$ | 2.70 | 1.75 |
| $I^-$ | 9.74 | 4.00 |
| $SO_4^-$ | 28.70 | 17.38 |
| $SCN^-$ | 18.26 | 8.75 |

[1]  Conditions:  eluent, 1.25 X $10^{-4}$ M sodium
phthalate, pH 4.65, 1.3 ml/min.  SBC – strongly
basic methacrylate latex coated on XAD-1 parti-
cles.  WBC – weakly basic methacrylate latex
coated on XAD-1 particles.  Capacity of SBC =
0.020 meq/g, capacity of WBC = 0.018 meq/g.  All
retention times are relative to $Cl^-$ taken as 1.00.

Table 3

Capacities Obtained After Coating Strongly Basic
Methacrylate Latex on Various Support Beads [1]

| Support Beads | Mean Particle Diameter | Capacity (2) |
|---|---|---|
| Poly (styrene-co-DVB) | 5 μm | 0.073 meq/g |
| Polyvinylacetate | 5 " | 0.020 " |
| Polyethylene glycol | 5 " | 0.025 " |

[1] Coating conditions were scaled down from the following : 1.0 g resin, acetonitrile wetted, 1 ml latex, 90 ml of 0.10 NaCl dilution.

[2] Capacity determination by $NO_3^-/SO_4^{2-}$ displacement method.

Table 4

Adjusted Retention Times of Anions of Various
Resins Coated with Strongly Basic Methacrylate
Latex (SBL)[1]

| Anion | SBL on TSK polystyrene $t_R'/t_{R',Cl}$ | SBL on TSK polyacetate $t_R'/t_{R',Cl}$ | SBL on TSK polyether $t_R'/t_{R',Cl}$ |
|---|---|---|---|
| $Cl^-$ | 1.00 ($t_R'$=.48 min.) | 1.00 ($t_R'$=.48 min.) | 1.00 ($t_R'$=.90 min.) |
| $Br^-$ | 3.16 | 3.80 | 2.76 |
| $NO_3^-$ | 4.26 | 5.50 | 3.49 |
| $I^-$ | 21.10 | 24.00 | 17.91 |
| $SO_4^{2-}$ | 18.66 | 24.80 | 17.91 |
| $SCN^-$ | 43.76 | 51.00 | 39.66 |
| $ClO_4^-$ | -- | 83.00 | 40.57 |
| $S_2O_3^{2-}$ | 77.96 | 95.00 | 48.08 |

(1) Conditions: eluent, $2 \times 10^{-4}$ M sodium phthalate, pH 5.5 at 1.3 ml/min. Capacities are 0.015 to 0.025 meq/gm. TSK - Toyo Soda KK. All retention times are relative to $CL^-$ taken as 1.00.

Claims

1. A composite ion-exchange composition comprising :
water insoluble hydrophobic support particles having an average particle size ranging from 2 to 50 μm, preferably from 3 to 12 μm, and no ion-exchange capacity,
and hydrophobically bound to the surface of said support particles, a coating of water insoluble, hydrophobic ion-exchange functionalized particles having an average particle size smaller than that of the support particles and ranging from 0.01 to 10 μm, preferably from 0.05 to 1.2 μm.

2. An ion-exchange composition according to claim 1 wherein the surface particles are derived from a resin latex.

3. An ion-exchange composition according to claim 2 wherein the support particles are derived from a mono-disperse resin latex and the surface particles are derived from a styrenic or acrylic resin latex.

4. An ion-exchange composition according to claim 1 or 2 wherein the support particles comprise a gelular or macroreticular resin and the surface particles are derived from a latex of one or more monoethylenically unsaturated monomers, preferably a vinyl aromatic monomer, and acrylic monomer or a mixture thereof, and cross-linking monomer therefor.

5. An ion-exchange composition according to claim 4 wherein the monoethylenically unsaturated monomer is an acrylic or styrenic monomer and the cross-linking monomer is divinylbenzene.

6. An ion-exchange composition according to claim 4 wherein the latex comprising the surface particles is derived from a mixture of a styrenic monomer, an acrylic monomer and divinylbenzene.

7. An ion-exchange composition according to claim 6 wherein the styrenic monomer is styrene and the acrylic monomer is dimethylaminoethyl methacrylate.

8. An ion-exchange composition according to any one of claims 1 to 7 wherein the support particles are derived from a multi-stage resin latex formed by serial polymerization in which an initial stage polymerizate comprises seed particles produced by emulsion polymerization of one or more ethylenically unsaturated monomers, and one or more subsequent stages comprise particles produced by polymerization of one or more ethylenically unsaturated monomers in the presence of the seed particles of the initial stage.

9. An ion-exchange composition according to claim 8 wherein the initial stage monomers are styrenic monomers, acrylic monomers or a mixture thereof.

10. A chromatographic column comprising a tubular body packed with the composite ion-exchange composition of any preceding claim.


## Patentansprüche

1. Ionen-Austauscher-Zusammensetzung, enthaltend :
wasserunlösliche, hydrophobe Trägerpartikel mit einer durchschnittlichen Partikelgröße im Bereich von 2 bis 50 μm, vorzugsweise 3 bis 12 μm, und ohne Ionen-Austauscher-Fähigkeit,
und einen an die Oberfläche der Trägerpartikel hydrophob gebundenen Überzug aus wasserunlöslichen, hydrophoben zum Ionenaustausch funktionalisierten Partikeln mit einer durchschnittlichen Partikelgröße kleiner als der der Trägerpartikel und im Bereich von 0,01 bis 10 μm, vorzugsweise 0,05 bis 1,2 μm.

2. Ionen-Austauscher-Zusammensetzung nach Anspruch 1, bei der die Oberflächen-Partikel von einem Harz-Latex stammen.

3. Ionen-Austauscher-Zusammensetzung nach Anspruch 2, bei der die Trägerpartikel von einem mono-dispersen Harz-Latex und die Oberflächen-Partikel von einem Styrol-oder Acryl-Harz-Latex stammen.

4. Ionen-Austauscher-Zusammensetzung nach Anspruch 1 oder 2, bei der die Trägerpartikel ein Gel- oder makro-netzartiges Harz umfassen und die Oberflächen-Partikel von einem Latex von einem oder mehreren monoethylenisch-ungesättigten Monomeren, vorzugsweise einem aromatischen Vinyl-Monomer und einem Acryl-Monomer oder einem Gemisch davon und einem hierfür vernetzten Monomer, stammen.

5. Ionen-Austauscher-Zusammensetzung nach Anspruch 4, bei der das monoethylenisch-ungesättigte Monomer ein Acryl-oder Styrol-Monomer und das Vernetzer-Monomer Divinylbenzol ist.

6. Ionen-Austauscher-Zusammensetzung nach Anspruch 4, bei der der die Oberflächen-Partikel umfassende Latex von einem Gemisch aus einem Styrol-Monomer, einem Acryl-Monomer und Divinylbenzol stammt.

7. Ionen-Austauscher-Zusammensetzung nach Anspruch 6, bei der das Styrol-Monomer Styrol und das Acryl-Monomer Dimethylaminoethylmethacrylat ist.

8. Ionen-Austauscher-Zusammensetzung nach einem der Ansprüche 1 bis 7, bei der die Trägerpartikel von einem mehrstufig, durch Serien-Polymerisation hergestellten Harz-Latex stammen, wobei bei der Serien-Polymersiation ein Ausgangsstufen-Polymerisat Saat-Partikel umfaßt, die durch Emulsions-Polymerisation von einem oder mehreren ethylenisch-ungesättigten Monomeren erhalten werden, und eine oder mehrere nachfolgende Stufen Partikel umfassen, die durch Polymerisation von einem oder mehreren ethylenisch-ungesättigten Monomeren in Gegenwart der Saat-Partikel der Ausgangsstufe erhalten werden.

9. Ionen-Austauscher-Zusammensetzung nach Anspruch 8, bei der die Ausgangsstufen-Monomere Styrol-Monomere, Acryl-Monomere oder ein Gemisch davon sind.

10. Chromatographie-Säule, umfassend einen röhrenförmigen mit der Ionen-Austauscher-Zusammensetzung nach einem der vorhergehenden Ansprüche versetzten Körper.

## Revendications

1. Composition échangeuse d'ions composite, comprenant :

des particules de support hydrophobes insolubles dans l'eau ayant une granulométrie moyenne s'échelonnant de 2 à 50 μm, de préférence de 3 à 12 μm, et n'ayant aucune capacité d'échange d'ions,

et, lié de façon hydrophobe à la surface desdites particules de support, un revêtement de particules fonctionnalisées échangeuses d'ions hydrophobes, insolubles dans l'eau, ayant une granulométrie moyenne inférieure à celle des particules de support et s'échelonnant de 0,01 à 10 μm, de préférence de 0,05 à 1,2 μm.

2. Composition échangeuse d'ions selon la revendication 1, dans laquelle les particules de surface dérivent d'un latex de résine.

3. Composition échangeuse d'ions selon la revendication 2, dans laquelle les particules de support dérivent d'un latex de résine mono-dispersée et les particules de surface dérivent d'un latex de résine styrénique ou acrylique.

4. Composition échangeuse d'ions selon la revendication 1 ou 2, dans laquelle les particules de support comprennent une résine gélifiée ou macroréticulaire et les particules de surface dérivent d'un latex d'un ou plusieurs monomères à insaturation monoéthylénique, de préférence d'un monomère vinyl-aromatique, et d'un monomère acrylique ou d'un mélange de ceux-ci, et d'un monomère de réticulation y relatif.

5. Composition échangeuse d'ions selon la revendication 4, dans laquelle le monomère à insaturation monoéthylénique est un monomère acrylique ou styrénique et le monomère de réticulation est le divinylbenzène.

6. Composition échangeuse d'ions selon la revendication 4, dans laquelle le latex constituant les particules de surface dérive d'un mélange d'un monomère styrénique, d'un monomère acrylique et de divinylbenzène.

7. Composition échangeuse d'ions selon la revendication 6, dans laquelle le monomère styrénique est le styrène et le monomère acrylique est le méthacrylate de diméthylaminoéthyle.

8. Composition échangeuse d'ions selon l'une quelconque des revendications 1 à 7, dans laquelle les particules de support dérivent d'un latex de résine à plusieurs stades formé par polymérisation en série dans laquelle le polymérisat du stade initial comprend des particules germes produites par polymérisation en émulsion d'un ou plusieurs monomères à insaturation éthylénique, et un ou plusieurs stades subséquents comprennent des particules produites par polymérisation d'un ou plusieurs monomères à insaturation éthylénique, en présence des particules germes du stade initial.

9. Composition échangeuse d'ions selon la revendication 8, dans laquelle les monomères du stade initial sont des monomères styréniques, des monomères acryliques ou un mélange de ceux-ci.

10. Colonne chromatographique comprenant un corps tubulaire garni de la composition échangeuse d'ions composite de l'une quelconque des revendications précédentes.

Strongly basic methacrylate latex (SAL) capacity on XAD-1 vs. NaCl concentration used as diluent.

NaCl Concentration (M)

capacity (micro eq/gm)

*Fig.1.*

Fig.2.

Separation of late-eluting
anions on weakly basic styrenic
latex coated on XAD-1.
$9 \times 10^{-4}$ M sodium phthalate eluent,
pH 5.10.  Flow rate = 1.3 ml/min.

*Fig.3.*

Separation of 12 monovalent anions on SAL-PS column.
1 = methyl acrylate, 2 = lactate, 3 = formate, 4 = fluoride,
5 = iodate, 6 = dihydrogen phosphate, 7 = monochloroacetate,
8 = ethylsulfonate, 9 = sulfamate, 10 = n-propylsulfonate,
11 = bromate, 12 = chloride, 25 -100 ppm each, 70 mM nicotinic
acid eluent, pH 3.5, 0.75 ml/min flow rate, 115 bar column
pressure, 0.1 μSFS.